# EUROPEAN PATENT APPLICATION

(11) **EP 4 852 544 A1**
(43) Date of publication of application: **09.12.2026**
(21) Application number: 25751148.5
(22) Date of filing: 20.01.2025
(51) Int. Cl.: H04W 52/38

(54) **COMMUNICATION METHOD, APPARATUS AND SYSTEM**

(30) Priority: 08.02.2024 CN 202410177391
(71) Applicant: HUAWEI TECHNOLOGIES CO., LTD., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN)
(74) Representative: Huawei European IPR
(86) International application number: PCT/CN2025/073277
(87) International publication number: WO 2025/167546

(57) **Abstract**

This application provides a communication method, apparatus, and system, and relates to the field of communication technologies. The method includes: receiving first information from a second AP, where the first information indicates a first RU and a second RU, the first RU is a discrete RU including N tones, the second RU is a regular RU including M tones, N is a positive integer, and M is a positive integer; and sending second information to a STA, where the second information indicates that P tones in the N tones of the first RU are used for transmission from the STA to the first AP, and P is a positive integer less than or equal to N. The first AP may share a same frequency band resource with another AP, and use tones in the frequency band resource in an interleaved manner for data transmission, so that a transmit power of each tone is increased when power spectral density is limited. Therefore, a transmit power in a multi-AP scenario can be increased in the foregoing embodiments.

## Description

This application claims priority to Chinese Patent Application No. 202410177391.8, filed with the China National Intellectual Property Administration on February 8, 2024 and entitled "COMMUNICATION METHOD, APPARATUS, AND SYSTEM", which is incorporated herein by reference in its entirety.

### TECHNICAL FIELD

This application relates to the field of communication technologies, and more specifically, to a communication method, apparatus, and system.

### BACKGROUND

A wireless local area network (wireless local area network, WLAN) may include a plurality of basic service sets (basic service set, BSS). Generally, one BSS includes one access point (access point, AP) and a plurality of stations (station, STA) associated with the AP. With an increase in high-density WLAN network deployment scenarios, a multi-AP coordinated technology emerges. An AP that preempts a transmission opportunity (transmission opportunity, TXOP) and allows another AP to perform coordinated transmission is referred to as a sharing AP (sharing AP) or a primary AP, and an AP that participates in coordinated transmission is referred to as a shared AP (shared AP) or a secondary AP. To avoid that data of some BSSs cannot be effectively transmitted in the foregoing multi-AP scenario, an orthogonal frequency-division multiple access (orthogonal frequency-division multiple access, OFDMA) technology may be applied.

However, how to increase a transmit power in the multi-AP scenario is an urgent problem to be resolved.

### SUMMARY

This application provides a communication method, to increase a transmit power in a multi-AP scenario.

According to a first aspect, a communication method is provided. The method may be performed by a first access point (access point, AP), or may be performed by a component (for example, a chip, a circuit, or a module) disposed in the first AP. This is not limited in this application.

The method includes: receiving first information from a second AP, where the first information indicates a first resource unit (resource unit, RU) and a second RU, the first RU is a discrete RU including N tones, the second RU is a regular RU including M tones, N is a positive integer, and M is a positive integer; and sending second information to a STA, where the second information indicates that P tones in the N tones of the first RU are used for transmission from the STA to the first AP, and P is a positive integer less than or equal to N.

According to the foregoing embodiment, the first information may indicate a DRU and an RRU. In other words, the second AP may allocate the DRU and the RRU to the first AP. The second AP may indicate the STA to transmit data to the first AP by using some or all tones in the DRU. In other words, the first AP may select the DRU from the DRU and the RRU that are allocated by the second AP, and indicate the STA to use the DRU to transmit data to the first AP. In the foregoing embodiment, an RU allocated to the first AP may be the DRU. In this way, the first AP can share a same frequency band resource with another AP, and use tones in the frequency band resource in an interleaved manner for data transmission, so that a transmit power of each tone transmitted by using the DRU is increased when power spectral density is limited. Therefore, a transmit power in a multi-AP scenario can be increased in the foregoing embodiments.

With reference to the first aspect, in some implementations of the first aspect, the method further includes: receiving third information from the second AP, where the third information indicates that the transmission from the STA to the first AP corresponds to the first RU.

According to the foregoing embodiment, the second AP may indicate the first AP by using the third information, and the first AP may select the first RU based on an indication of the third information, and indicate the STA to perform first uplink transmission (the transmission from the STA to the first AP) by using the first RU. The foregoing solution can support the second AP in indicating, on a proper occasion, the first AP to use the first RU, thereby increasing a transmit power of the transmission from the STA to the first AP.

With reference to the first aspect, in some implementations of the first aspect, the method further includes: sending data to the STA on the second RU.

According to the foregoing embodiment, the first AP sends the data to the STA by using the second RU, and a tone plan is relatively simple, thereby reducing system complexity.

With reference to the first aspect, in some implementations of the first aspect, the method further includes: receiving fourth information from the second AP, where the fourth information indicates that transmission from the first AP to the STA corresponds to the second RU; or the fourth information indicates that transmission from the first AP to the STA corresponds to the second RU, and indicates that the transmission from the STA to the first AP corresponds to the first RU.

According to the foregoing embodiment, the second AP may indicate the first AP by using the fourth information, and the first AP may select the second RU based on an indication of the fourth information, and perform first downlink transmission (the transmission from the first AP to the STA) by using the second RU. The foregoing solution can support the second AP in indicating, on a proper occasion, the first AP to use the second RU, and a tone plan is relatively simple, thereby reducing system complexity. In addition, in the foregoing solution, the fourth information may be further used to indicate that RUs used for the first downlink transmission and the first uplink transmission (the transmission from the STA to the first AP) are respectively the second RU and the first RU. Compared with a solution in which two pieces of information are used for respectively indications, the foregoing embodiment reduces resource overheads.

With reference to the first aspect, in some implementations of the first aspect, the method further includes: sending data to the STA on the first RU.

According to the foregoing embodiment, the first AP sends the data to the STA by using the first RU, thereby increasing a transmit power.

With reference to the first aspect, in some implementations of the first aspect, the method further includes: receiving fifth information from the second AP, where the fifth information indicates that transmission from the first AP to the STA corresponds to the first RU; or the fifth information indicates that transmission from the first AP to the STA corresponds to the first RU, and indicates that the transmission from the STA to the first AP corresponds to the first RU.

According to the foregoing embodiment, the second AP may indicate the first AP by using the fifth information, and the first AP may select the first RU based on an indication of the fifth information, and perform first downlink transmission (the transmission from the first AP to the STA) by using the first RU. The foregoing solution can support the second AP in indicating, on a proper occasion, the first AP to use the first RU, thereby increasing a transmit power. In addition, in the foregoing solution, the fifth information may be further used to indicate that the first RU is used for both the first downlink transmission and the first uplink transmission (the transmission from the STA to the first AP). Compared with a solution in which two pieces of information are used for respectively indications, the foregoing embodiment reduces resource overheads.

With reference to the first aspect, in some implementations of the first aspect, M=N.

According to the foregoing embodiment, the first RU and the second RU may have a same size, so that information used to indicate the first RU and the second RU can be reduced, thereby reducing resource overheads.

With reference to the first aspect, in some implementations of the first aspect, a number of the first RU is the same as a number of the second RU.

According to the foregoing embodiment, the first RU and the second RU may have a same number, so that information used to indicate the first RU and the second RU can be reduced, thereby reducing resource overheads.

With reference to the first aspect, in some implementations of the first aspect, the method further includes: sending data to the second AP on the second RU.

According to the foregoing embodiment, the first AP sends the data to the second AP by using the second RU, thereby increasing a transmit power of transmission from the first AP to the second AP.

With reference to the first aspect, in some implementations of the first aspect, the method further includes: receiving sixth information from the second AP, where the sixth information indicates that transmission from the first AP to the second AP corresponds to the second RU.

With reference to the first aspect, in some implementations of the first aspect, the method further includes: sending data to the second AP on the first RU.

According to the foregoing embodiment, the first AP sends the data to the second AP by using the first RU, and a tone plan is relatively simple, thereby reducing system complexity.

With reference to the first aspect, in some implementations of the first aspect, the method further includes: receiving seventh information from the second AP, where the seventh information indicates that transmission from the first AP to the second AP corresponds to the first RU.

With reference to the first aspect, in some implementations of the first aspect, the method further includes: receiving data from the second AP on the second RU.

According to the foregoing embodiment, the second AP sends the data to the first AP by using the second RU, thereby increasing a transmit power of transmission from the second AP to the first AP.

With reference to the first aspect, in some implementations of the first aspect, the method further includes: receiving eighth information from the second AP, where the eighth information indicates that transmission from the second AP to the first AP corresponds to the second RU.

With reference to the first aspect, in some implementations of the first aspect, the method further includes: receiving data from the second AP on the first RU.

According to the foregoing embodiment, the second AP sends the data to the first AP by using the first RU, and a tone plan is relatively simple, thereby reducing system complexity.

With reference to the first aspect, in some implementations of the first aspect, the method further includes: receiving ninth information from the second AP, where the ninth information indicates that transmission from the second AP to the first AP corresponds to the first RU.

According to a second aspect, a communication method is provided. The method may be performed by a second AP, or may be performed by a component (for example, a chip, a circuit, or a module) disposed in the second AP. This is not limited in this application.

The method includes: sending first information to a first AP, where the first information indicates a first RU and a second RU, the first RU is a discrete RU including N tones, the second RU is a regular RU including M tones, N is a positive integer, and M is a positive integer.

With reference to the second aspect, in some implementations of the second aspect, the method further includes: sending third information to the first AP, where the third information indicates that transmission from a STA to the first AP corresponds to the first RU.

With reference to the second aspect, in some implementations of the second aspect, the method further includes: sending fourth information to the first AP, where the fourth information indicates that transmission from the first AP to a STA corresponds to the second RU; or the fourth information indicates that transmission from the first AP to the STA corresponds to the second RU, and indicates that transmission from the STA to the first AP corresponds to the first RU.

With reference to the second aspect, in some implementations of the second aspect, the method further includes: sending fifth information to the first AP, where the fifth information indicates that transmission from the first AP to a STA corresponds to the first RU; or the fifth information indicates that transmission from the first AP to the STA corresponds to the first RU, and indicates that transmission from the STA to the first AP corresponds to the first RU.

With reference to the second aspect, in some implementations of the second aspect, M=N.

With reference to the second aspect, in some implementations of the second aspect, a number of the first RU is the same as a number of the second RU.

With reference to the second aspect, in some implementations of the second aspect, the method further includes: receiving data from the second AP on the second RU.

With reference to the second aspect, in some implementations of the second aspect, the method further includes: sending sixth information to the first AP, where the sixth information indicates that transmission from the first AP to the second AP corresponds to the second RU.

With reference to the second aspect, in some implementations of the second aspect, the method further includes: receiving data from the first AP on the first RU.

With reference to the second aspect, in some implementations of the second aspect, the method further includes: sending seventh information to the first AP, where the seventh information indicates that transmission from the first AP to the second AP corresponds to the first RU.

With reference to the second aspect, in some implementations of the second aspect, the method further includes: sending data to the first AP on the second RU.

With reference to the second aspect, in some implementations of the second aspect, the method further includes: sending eighth information to the first AP, where the eighth information indicates that transmission from the second AP to the first AP corresponds to the second RU.

With reference to the second aspect, in some implementations of the second aspect, the method further includes: sending data to the first AP on the first RU.

With reference to the second aspect, in some implementations of the second aspect, the method further includes: sending ninth information to the first AP, where the ninth information indicates that transmission from the second AP to the first AP corresponds to the first RU.

According to a third aspect, a communication apparatus is provided, including a processing circuit (or a processor) and an input/output interface (which may also be referred to as an interface circuit). The input/output interface is configured to input and/or output a signal, and the processing circuit is configured to perform any one of the first aspect and the possible methods of the first aspect, or the processing circuit is configured to perform any one of the second aspect and the possible methods of the second aspect.

In some implementations, the processing circuit is configured to: communicate with another apparatus by using the interface circuit, and perform any one of the first aspect and the possible methods of the first aspect, or perform any one of the second aspect and the possible methods of the second aspect.

According to a fourth aspect, a communication apparatus is provided. The communication apparatus may include a device, a module, or the like that is configured to perform a function of the communication apparatus.

In some implementations, the communication apparatus may include a module or unit that is in a one-to-one correspondence with and configured to perform the method/operation/step/action described in any one of the first aspect and the possible implementations of the first aspect. The module or unit may be a hardware circuit, may be software, or may be implemented by a combination of a hardware circuit and software.

In some implementations, the communication apparatus may include a module or unit that is in a one-to-one correspondence with and configured to perform the method/operation/step/action described in any one of the second aspect and the possible implementations of the second aspect. The module or unit may be a hardware circuit, may be software, or may be implemented by a combination of a hardware circuit and software.

According to a fifth aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to a sixth aspect, a computer program product is provided, including a computer program or instructions. When the computer program or the instructions are run on a computer, the method according to any one of the first aspect and the possible implementations of the first aspect is performed, or the method according to any one of the second aspect and the possible implementations of the second aspect is performed.

According to a seventh aspect, a communication apparatus is provided, including a processor. The processor is configured to be connected to a memory, and configured to invoke a program stored in the memory, to perform any possible method in the first aspect or any possible method in the second aspect. The memory may be located inside or outside the communication apparatus. In addition, there are one or more processors.

In an implementation, the communication apparatus in the third aspect, the fourth aspect, or the seventh aspect may be a chip or a chip system.

According to an eighth aspect, a chip is provided, including a processor. The processor is configured to invoke a computer program or computer instructions in a memory, so that the processor is enabled to perform any implementation of the first aspect, or the processor is enabled to perform any implementation of the second aspect.

In some implementation, the processor is coupled to the memory by using an interface.

According to a ninth aspect, a communication system is provided, including a first AP and a second AP. The first AP is configured to perform any one of the first aspect and the possible implementations of the first aspect, and the second AP is configured to perform any one of the second aspect and the possible implementations of the second aspect.

For descriptions of beneficial effect of any one of the second aspect to the ninth aspect, refer to descriptions of beneficial effect of the first aspect.

### BRIEF DESCRIPTION OF DRAWINGS

FIG. 1 is a diagram of an application scenario to which an embodiment of this application is applicable;
FIG. 2 is a diagram of a tone plan and an RRU distribution in a 20 MHz transmission bandwidth;
FIG. 3 is a diagram of a tone plan and an RRU distribution in a 40 MHz transmission bandwidth;
FIG. 4 is a diagram of a tone plan and an RRU distribution in an 80 MHz transmission bandwidth;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a diagram of a resource allocation scheme according to an embodiment of this application;
FIG. 10 is a diagram of transmission between a first AP and a STA according to an embodiment of this application;
FIG. 11 is a diagram of a communication apparatus according to an embodiment of this application;
FIG. 12 is a diagram of another communication apparatus according to an embodiment of this application; and
FIG. 13 is a diagram of still another communication apparatus according to this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario, for example, supporting the Institute of Electrical and Electronics Engineers (Institute of Electrical and Electronics Engineers, IEEE) 802.11 related standards, such as the 802.11a/b/g standard, the 802.11n standard, the 802.11ac standard, the 802.11ax standard, the 802.11be standard, the 802.11bn standard/UHR standard, the 802.11ad standard, the 802.11ay standard, the UWB standard, 802.15 series standards, or 802.11bf series standards.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a Bluetooth (Bluetooth) network, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of used coverage and a used wireless access protocol, the various aspects provided in embodiments of this application are applicable to any appropriate wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system, an internet of things (internet of things, IoT), and a vehicle-to-everything (vehicle-to-x, V2X).

The foregoing communication systems to which this application is applicable are merely examples for description, and the communication systems to which this application is applicable are not limited thereto. This is uniformly described herein, and details are not described below again.

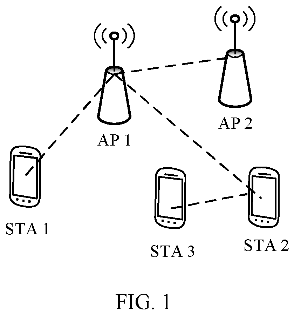

FIG. 1 is a diagram of an application scenario to which an embodiment of this application is applicable. As shown in FIG. 1, a communication method provided in this application is applicable to communication between stations (station, STA). The station may be an AP station, or may be a non-access point station (non-access point station, non-AP STA). This is not limited in this application. In the following, an AP station is briefly referred to as an AP, and a non-AP STA is briefly referred to as a STA. Specifically, the solutions in this application are applicable to communication between an AP and one or more stations (for example, communication between an AP 1 and a STA 1 and a STA 2), and are also applicable to communication between APs (for example, communication between an AP 1 and an AP 2), and communication between STAs (for example, communication between a STA 2 and a STA 3).

For example, an access point may be a node through which a terminal (for example, a mobile phone) accesses a wired (or wireless) network, and is mainly deployed at home, in a building, or on a campus, with a typical coverage radius ranging from tens of meters to more than a hundred meters, or certainly, may be deployed outdoors. The access point is equivalent to a bridge that connects a wired network and a wireless network, and is mainly used to connect various wireless network clients together and then connect the wireless network to the Ethernet.

Specifically, the access point may be a terminal or a network device with a Wi-Fi chip. The network device may be a server (or communication server), a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may also support one or more standards of an IEEE 802.11 family, such as 802.11a, 802.11b, 802.11g, 802.11n, 802.11ac, 802.11ax, 802.11be, 802.11bn/UHR, 802.11ad, and 802.11ay.

The station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The station may be a device that supports a WLAN standard. For example, the station may also support one or more standards of the IEEE 802.11 family, such as 802.11a, 802.11b, 802.11g, 802.11n, 802.11ac, 802.11ax, 802.11be, 802.11bn/UHR, 802.11ad, and 802.11ay.

For example, the station may be a mobile phone, a tablet computer, a set-top box, a smart television, a smart wearable device, a vehicle-mounted communication device, a computer, an internet of things (internet of things, IoT) node, a sensor, a smart home device like a smart camera, a smart remote control, or a smart water/electricity meter, or a sensor in a smart city.

The AP or the station may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

The WLAN has gone through a plurality of generations. The 802.11n standard may be referred to as high throughput (high throughput, HT), the 802.11ac standard may be referred to as very high throughput (very high throughput, VHT), the 802.11ax (Wi-Fi 6) may be referred to as high efficiency (high efficient, HE), the 802.11be (Wi-Fi 7) may be referred to as extremely high throughput (extremely high throughput, EHT), and the 802.11bn may be referred to as ultra high reliability (ultra high reliability, UHR). Standards such as 802.11a/b/g before HT may be collectively referred to as non-high throughput (Non-HT).

In terms of a bandwidth configuration, the following bandwidth configurations such as 20 MHz, 40 MHz, 80 MHz, 160 MHz, and 80 MHz+80 MHz are supported in 802.11ax. A difference between 160 MHz and 80 MHz+80 MHz lies in that the former is a contiguous frequency band, whereas the latter includes two 80 MHz frequency bands that may be non-contiguous. In 802.11be, 320 MHz is supported. The new 802.11bn standard also supports a maximum bandwidth of at least 320 MHz.

The WLAN may include a plurality of basic service sets (basic service set, BSS). Generally, one BSS includes one AP and a plurality of STAs associated with the AP. With an increase in high-density WLAN network deployment scenarios, a multi-AP coordinated technology emerges. An AP that preempts a transmission opportunity (transmission opportunity, TXOP) and allows another AP to perform coordinated transmission is referred to as a sharing AP (sharing AP) or a primary AP, and an AP that participates in coordinated transmission is referred to as a shared AP (shared AP) or a secondary AP. To avoid that data of some BSSs cannot be effectively transmitted in the foregoing multi-AP scenario, an orthogonal frequency-division multiple access (orthogonal frequency-division multiple access, OFDMA) technology may be applied. In this way, different BSSs can use different frequency band resources respectively through effective negotiation, so that stations in this BSS can be served simultaneously, thereby avoiding a problem that another BSS cannot perform transmission temporarily because one BSS occupies an entire bandwidth.

For example, a total bandwidth is 80 MHz. It is assumed that an AP #1 and a STA (which may also be referred to as a BSS #1) corresponding to the AP #1 occupy 40 MHz after frequency division, and an AP #2 and a STA (which may be referred to as a BSS #2) corresponding to the AP #2 occupy another 40 MHz after frequency division. It is assumed that there is only one STA in each BSS, and the AP #1 triggers the STA corresponding to the AP #1 to use a resource unit (resource unit, RU) in 40 MHz. Therefore, the AP #1 may be referred to as a 484-tone RU. The AP #2 triggers the STA corresponding to the AP #2 to use another 484-tone RU. In this case, when the OFDMA technology is applied, the 484-tone RU is allocated to each of the two stations. The 484-tone RU may be referred to as a regular resource unit (regular resource unit, rRU or RRU) or a contiguous RU.

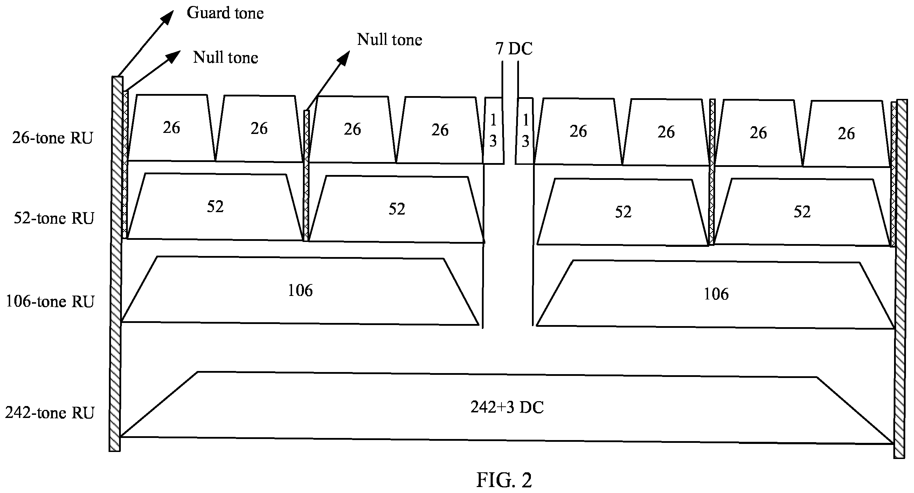

FIG. 2 is a diagram of a tone plan (tone plan) and an RRU distribution in a 20 MHz transmission bandwidth.

As shown in FIG. 2, when a bandwidth is 20 MHz, the entire bandwidth may include an entire 242-tone RRU, or may include a 26-tone RRU, a 52-tone RRU, a 106-tone RRU, or a combination of at least two of the 26-tone RRU, the 52-tone RRU, and the 106-tone RRU. The 26-tone RRU represents that the RRU includes 26 tones, the 52-tone RRU represents that the RRU includes 52 tones, the 106-tone RRU represents that the RRU includes 106 tones, and so on. In addition to a tone used for data transmission, the RRU further includes a pilot tone. In addition to tones included in the RRU, the bandwidth further includes some guard (guard) tones, null tones, or direct current (direct current, DC) tones.

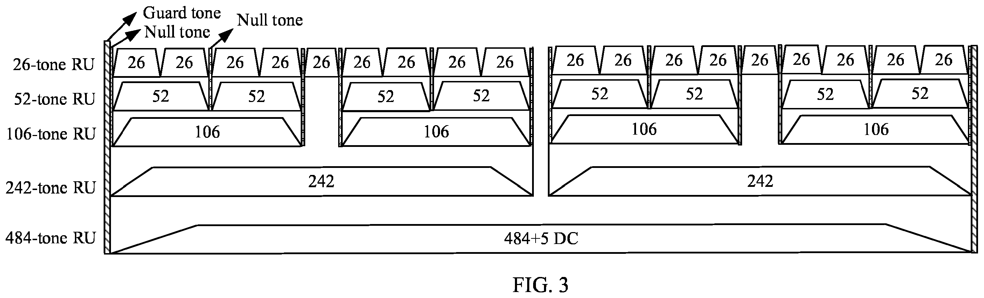

FIG. 3 is a diagram of a tone plan and an RRU distribution in a 40 MHz transmission bandwidth.

Refer to FIG. 3. When a bandwidth is 40 MHz, the entire bandwidth is approximately equivalent to a replication of a tone plan of 20 MHz. The entire bandwidth may include an entire 484-tone RRU, or may include any one of a 26-tone RRU, a 52-tone RRU, a 106-tone RRU, and a 242-tone RRU, or a combination of at least two of the 26-tone RRU, the 52-tone RRU, the 106-tone RRU, and the 242-tone RRU.

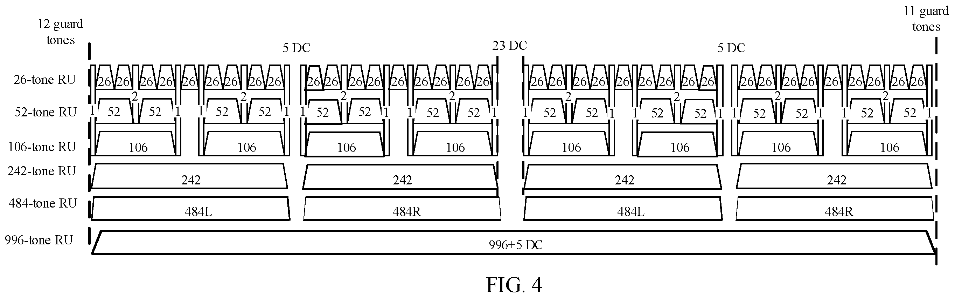

FIG. 4 is a diagram of a tone plan and an RRU distribution in an 80 MHz transmission bandwidth.

Refer to FIG. 4. When a bandwidth is 80 MHz, the entire bandwidth may include four RRUs in a unit of 242-tone RRU, or may include an entire 996-tone RRU, or may include various combinations of a 26-tone RRU, a 52-tone RRU, a 106-tone RRU, a 242-tone RRU, and a 484-tone RRU. 484L and 484R are another representation method of 484+5DC in FIG. 4, and respectively represent a left half part and a right half part of the 484-tone RRU. 484L and 484R each include 242 tones. When a bandwidth is 160 MHz or 80+80 MHz, the entire bandwidth may be considered as a replication of a tone plan of two 80 MHz. The entire bandwidth may include an entire 2*996-tone RRU, or may include any one of a 26-tone RRU, a 52-tone RRU, a 106-tone RRU, a 242-tone RRU, a 484-tone RRU, and a 996-tone RRU, or a combination of at least two of the 26-tone RRU, the 52-tone RRU, the 106-tone RRU, the 242-tone RRU, the 484-tone RRU, and the 996-tone RRU. When a bandwidth is 240 MHz or 160+80 MHz, the entire bandwidth may be considered as a replication of a tone plan of three 80 MHz. When a bandwidth is 320 MHz or 160+160 MHz, the entire bandwidth may be considered as a replication of a tone plan of four 80 MHz. Distribution diagrams are not separately provided herein.

It should be noted that FIG. 2 to FIG. 4 are merely used as examples, and do not constitute a limitation on this application.

In FIG. 2 to FIG. 4, a left side of the figure may be considered as a lowest frequency, and a right side of the figure may be considered as a highest frequency. In the foregoing tone plan, 242-tone RRUs are numbered 1st, 2nd, ..., and 16th from left to right in a unit of 242-tone RRU. It should be noted that in a data field, a maximum of 16 242-tone RRUs are in one-to-one correspondence with 16 20 MHz channels in ascending order of frequencies.

In addition to the foregoing RRUs, 11be further introduces a 52+26-tone RRU consisting of a 52-tone RRU and a 26-tone RRU, a 106+26-tone RRU consisting of a 106-tone RRU and a 26-tone RRU, a 484+242-tone RRU consisting of a 484-tone RRU and a 242-tone RRU, a 996+484-tone RRU consisting of a 996-tone RRU and a 484-tone RRU, a 242+484+996-tone RRU consisting of a 242-tone RRU, a 484-tone RRU, and a 996-tone RRU, a 2*996+484-tone RRU consisting of two 996-tone RRUs and a 484-tone RRU, a 3*996-tone RRU consisting of three 996-tone RRUs, and a 3*996+484-tone RRU consisting of three 996-tone RRUs and a 484-tone RRU. The foregoing combined resource unit may be referred to as a multi-RU (multi-RU, MRU).

In terms of bandwidth, the 26-tone RRU approximately corresponds to 2 MHz, the 52-tone RRU approximately corresponds to 4 MHz, the 106-tone RRU approximately corresponds to 8 MHz, and the 242-tone RRU approximately corresponds to 20 MHz. Sizes of other RRUs may be obtained through adding or multiplying correspondingly. Details are not described herein.

For example, it may be learned from FIG. 2 to FIG. 4 that tones in the RRU are contiguous. An RU consisting of such contiguous tones has a relatively small bandwidth, and a power corresponding to each tone is relatively low.

In recent years, some provisions of a 6 GHz spectrum define a low power indoor (low power indoor, LPI) communication manner, and strictly limit a maximum transmit power and a maximum frequency spectral density. For example, for the AP, a maximum power is 30 decibel-milliwatts (decibel-milliwatt, dBm), and a maximum power spectral density is 5 decibel-milliwatts/megahertz (decibel-milliwatt/megahertz, dBm/MHz). For the STA, a maximum power is 24 dBm, and a maximum power spectral density is -1 dBm/MHz. A transmit power of a device is limited by both a maximum power and a maximum power spectral density. In other words, the transmit power of the device cannot exceed the maximum power or the maximum power spectral density (a transmit power of each MHz cannot exceed a given value).

Therefore, when the power spectral density is limited, a corresponding transmit bandwidth may be expanded to implement a larger transmit power of a device. From a perspective of tones, a transmit power may be increased by making tones allocated to a device more discrete in frequency domain. In this case, although the tones allocated to the device are not increased, a total power can be increased because a transmit bandwidth is increased (because a quantity of tones corresponding to a same device in each MHz is reduced, a larger transmit power can be obtained from the perspective of tones).

Table 1 shows a relationship between a maximum transmit power and a bandwidth in an LPI scenario.

**Table 1**

| Transmit bandwidth | Maximum power of an AP | Maximum power of a STA |
|---|---|---|
| 20 MHz | 18 dBm | 12 dBm |
| 40 MHz | 21 dBm | 15 dBm |
| 80 MHz | 24 dBm | 18 dBm |
| 160 MHz | 27 dBm | 21 dBm |
| 320 MHz | 30 dBm | 24 dBm |

20 MHz in Table 1 is used as an example, 18 dBm-5 dBm=13 dB, and 13 dB=10^{1.3}=19.95. In other words, the bandwidth is approximately equal to 20 MHz. It may be learned that a maximum power in a transmit bandwidth is approximately equal to a value obtained when a maximum transmit power is reached per MHz.

A discrete RU (discontinuous RU, DRU, or dRU) includes a plurality of tones that are discrete in frequency domain, or includes a plurality of tones whose index values are discrete, or includes a plurality of tones whose index values are non-consecutive. The plurality of discrete tones may be partially discrete or completely discrete. In other words, the plurality of discrete tones may include some tones contiguous in frequency and some tones discontiguous in frequency, or the plurality of discrete tones may be completely discontiguous in frequency. For example, the plurality of discrete tones may include some tones contiguous in frequency, and include some tones discontiguous in frequency. For another example, the plurality of discrete tones may alternatively be completely discontiguous in frequency. The foregoing "contiguous in frequency" may mean that index values of tones are consecutive, and the foregoing "discontiguous in frequency" may mean that index values of tones are non-consecutive. In short, the discrete RU may be considered as an RU obtained by discretely designing an RRU, thereby reducing tone density of the RRU, and increasing a transmit power of a single tone.

For a DRU and a contiguous RU (or referred to as an rRU) that include a same quantity of tones, a bandwidth spanned by the DRU from a low-frequency start location to a high-frequency end location in frequency domain is greater than a bandwidth occupied by the contiguous RU. In this way, when the maximum power spectral density is the same, a total transmit power of the DRU is greater than a total transmit power of the contiguous RU. In other words, when the power spectral density is limited, a limited quantity of tones (for example, 26 tones included in a contiguous 26-tone RU) are discretely allocated to a wider bandwidth, that is, to more tones (for example, to odd-numbered tones of two contiguous 26-tone RUs), so that a transmit power can be increased. Therefore, in comparison with the contiguous RU, when data transmission is performed by using the discrete RU, a transmit power on a single tone can be increased, and a signal-to-noise ratio (signal-to-noise ratio, SNR) can be improved.

For example, a total bandwidth is 80 MHz. It is assumed that an AP #1 and a STA (which may also be referred to as a BSS #1) corresponding to the AP #1 occupy 40 MHz after frequency division, and an AP #2 and a STA (which may be referred to as a BSS #2) corresponding to the AP #2 occupy another 40 MHz after frequency division. It is assumed that there is only one STA in each BSS, and the AP #1 triggers the STA corresponding to the AP #1 to use an RRU in 40 MHz. A largest RRU usable in 40 MHz is a 484-tone RRU. The AP #2 triggers the STA corresponding to the AP #2 to use another 484-tone RRU. In this case, when the OFDMA technology is applied, the 484-tone RRU is allocated to each of the two stations, namely, the foregoing 484-tone RRU.

An example in which the total bandwidth is 80 MHz is still used, the AP #1 and the STA (which may also be referred to as the BSS #1) corresponding to the AP #1 may occupy 80 MHz, and the AP #2 and the STA (which may be referred to as the BSS #2) corresponding to the AP #2 may also occupy 80 MHz. It is assumed that there is only one STA in each BSS, and the AP #1 triggers the STA corresponding to the AP #1 to use a DRU in 80 MHz, for example, a 484-tone DRU 1. The AP #2 triggers the STA corresponding to the AP #2 to use another DRU in the same 80 MHz, for example, a 484-tone DRU 2. Therefore, in comparison with the used 484-tone RRU, for the same 80 MHz, the 484-tone DRU has a smaller quantity of corresponding tones per MHz than the 484-tone RRU, so that a larger total transmit power can be achieved and transmission performance is improved.

In another description, the DRU includes a plurality of tone groups that are discrete in frequency domain, and one tone group includes one tone or a plurality of contiguous tones. A quantity of tones included in each tone in the plurality of tone groups may be the same or different. For example, the quantity of the tones in each tone group may be 1. For another example, a 26-tone DRU may include four tone groups, and quantities of tones in the four tone groups may be 7, 7, 6, and 6 sequentially.

It should be noted that the DRU may alternatively have another name, and the name of the DRU is not limited in this application.

Table 2 shows an example of a tone plan manner of a DRU when a transmit bandwidth is 20 MHz. Table 2 is merely used as an example, and does not constitute a limitation on this application.

**Table 2**

| | | | | | | | | | | | | | | | |
|---|---|---|---|---|---|---|---|---|---|---|---|---|---|---|---|
| **-128** | | **-112** | 5 | **-32** | 9 | **-16** | 7 | **0** | DC | **16** | 6 | **96** | 1 | **112** | 9 |
| **-127** | | **-111** | 1 | **-31** | 5 | **-15** | 4 | **1** | DC | **17** | 3 | **97** | 6 | **113** | 5 |
| **-126** | | **-110** | 6 | **-30** | 1 | **-14** | 9 | **2** | DC | **18** | 8 | **98** | 3 | **114** | 1 |
| **-125** | | **-109** | 3 | **-29** | 6 | **-13** | 5 | **3** | 106-2 | **19** | 2 | **99** | 8 | **115** | 6 |
| **-124** | | **-108** | 8 | **-28** | 3 | **-12** | 1 | **4** | 106-1 | **20** | 7 | **100** | 2 | **116** | 3 |
| **-123** | | **-107** | 2 | **-27** | 8 | **-11** | 6 | **5** | 5 | **21** | 4 | **101** | 7 | **117** | 8 |
| **-122** | | **-106** | 7 | **-26** | 2 | **-10** | 3 | **6** | 1 | **22** | 9 | **102** | 4 | **118** | 2 |
| **-121** | 5 | **-105** | 4 | **-25** | 7 | **-9** | 8 | **7** | 6 | **23** | 5 | **103** | 9 | **119** | 7 |
| **-120** | 1 | **-104** | 9 | **-24** | 4 | **-8** | 2 | **8** | 3 | **24** | 1 | **104** | 5 | **120** | 4 |
| **-119** | 6 | **-103** | 5 | **-23** | 9 | **-7** | 7 | **9** | 8 | **25** | 6 | **105** | 1 | **121** | 9 |
| **-118** | 3 | **-102** | 1 | **-22** | 5 | **-6** | 4 | **10** | 2 | **26** | 3 | **106** | 6 | **122** | |
| **-117** | 8 | **-101** | 6 | **-21** | 1 | **-5** | 9 | **11** | 7 | **27** | 8 | **107** | 3 | **123** | |
| **-116** | 2 | **-100** | 3 | **-20** | 6 | **-4** | 106-1 | **12** | 4 | **28** | 2 | **108** | 8 | **124** | |
| **-115** | 7 | **-99** | 8 | **-19** | 3 | **-3** | 106-2 | **13** | 9 | **29** | 7 | **109** | 2 | **125** | |
| **-114** | 4 | **-98** | 2 | **-18** | 8 | **-2** | DC | **14** | 5 | **30** | 4 | **110** | 7 | **126** | |
| **-113** | 9 | ... | ... | **-17** | 2 | **-1** | DC | **15** | 1 | **...** | ... | **111** | 4 | **127** | |

The tone plan manner of the DRU shown in Table 2 may also be referred to as a uniform allocation method. The bold numerals from top to bottom and from left to right indicate numbers of 256 tones from -128 to +127 in 20 MHz. The unbolded numeral on the right of the bold numeral represents a number of the 26-tone DRU in 20 MHz, that is, represents which 26-tone DRU a tone belongs to (9 26-tone RUs are defined in 20 MHz). A vacant location in Table 2 corresponds to a null tone or a guard tone. DC represents a DC tone. The 106-tone DRU may include four 26-tone DRUs and two additional tones. In Table 2, 106-1 may represent two additional tones in one 106-tone DRU, and 106-2 may represent two additional tones in another 106-tone DRU. In this way, the uniform allocation method can be understood as that, overall, each 26-tone DRU appears round by round in a specific order. For example, in the example shown in Table 2, a used order of appearance is 1, 6, 3, 8, 2, 7, 4, 9, 5, followed by another round of 1, 6, 3, 8, 2, 7, 4, 9, 5.

Based on the 26-tone DRU, the 52-tone DRU, the 106-tone DRU, the 242-tone DRU, and the like may be established. Details are not described herein.

Table 3 shows quantities of tones in DRUs of different sizes obtained according to a uniform allocation method in different bandwidths.

**Table 3**

| RU size | 20 MHz bandwidth | 40 MHz bandwidth | 80 MHz bandwidth |
|---|---|---|---|
| | Quantity of tones/MHz | Quantity of tones/MHz | Quantity of tones/MHz |
| 26-tone DRU | 2 | 1 | 1 |
| 52-tone DRU | 3 | 2 | 1 |
| 106-tone DRU | 6 | 3 | 2 |
| 242-tone DRU | DRU not supported | 7 | 4 |
| 484-tone DRU | DRU not supported | DRU not supported | 7 |
| 996-tone DRU | DRU not supported | DRU not supported | DRU not supported |

Refer to Table 3. A smaller quantity of tones per MHz represents that a larger power can be allocated to a single tone, thereby increasing a total transmit power to a greater extent.

Table 4 shows manners of obtaining a 52-tone DRU and a 106-tone DRU in a 20 MHz bandwidth.

**Table 4**

| Bandwidth | DRU size | DRU number |
|---|---|---|
| | 26-tone DRU | 26-tone DRU 1; 2; 3; 4; 5; 6; 7; 8; 9; |
| | 52-tone DRU | 52-tone DRU 1 (26-tone RU 1+26-tone RU 2); |
| | | 52-tone DRU 2 (26-tone RU 3+26-tone RU 4); |
| | | 52-tone DRU 3 (26-tone RU 6+26-tone RU 7); |
| | | 52-tone DRU 4 (26-tone RU 8+26-tone RU 9); |
| 20 MHz | 106-tone DRU | 106-tone DRU 1 (52-tone DRU 1+52-tone DRU 2+two additional tones); |
| | | 106-tone DRU 2 (52-tone DRU 3+52-tone DRU 4+two additional tones); |
| | 242-tone DRU | N/A |

N/A represents not applicable (not applicable). For example, the 52-tone DRU 1 may include the 26-tone DRU 1 and the 26-tone DRU 2. For other 52-tone DRUs, details are not described. The 106-tone DRU 1 may include the 52-tone DRU 1, the 52-tone DRU 2, and the two additional tones (for example, represented by 106-1). The 106-tone DRU 2 may include the 52-tone DRU 3, the 52-tone DRU 4, and the two additional tones (for example, represented by 106-2). The 20 MHz bandwidth is not applicable to the 242-tone DRU. The DRU in Table 4 may alternatively be replaced with an RRU.

Table 5 shows manners of obtaining a 52-tone DRU, a 106-tone DRU, and a 242-tone DRU in a 40 MHz bandwidth.

**Table 5**

| Bandwidth | DRU size | dDRU number |
|---|---|---|
| | 26-tone DRU | 26-tone DRU 1; 2; 3; 4; 5; 6; 7; 8; 9; 10; 11; 12; 13; 14; 15; 16; 17; 18 |
| | 52-tone DRU | 52-tone DRU 1 (26-tone DRU 1+26-tone DRU 2); |
| | | 52-tone DRU 2 (26-tone DRU 3+26-tone DRU 4); |
| | | 52-tone DRU 3 (26-tone DRU 6+26-tone DRU 7); |
| | | 52-tone DRU 4 (26-tone DRU 8+26-tone DRU 9); |
| | | 52-tone DRU 5 (26-tone DRU 10+26-tone DRU 11); |
| | | 52-tone DRU 6 (26-tone DRU 12+26-tone DRU 13); |
| | | 52-tone DRU 7 (26-tone DRU 15+26-tone DRU 16); |
| | | 52-tone DRU 8 (26-tone DRU 17+26-tone DRU 18); |
| 40 MHz | 106-tone DRU | 106-tone DRU 1 (52-tone DRU 1+52-tone DRU 2+two additional tones); |
| | | 106-tone DRU 2 (52-tone DRU 3+52-tone DRU 4+two additional tones); |
| | | 106-tone DRU 3 (52-tone DRU 5+52-tone DRU 6+two additional tones); |
| | | 106-tone DRU 4 (52-tone DRU 7+52-tone DRU 8+two additional tones); |
| | 242-tone DRU | 242-tone DRU 1 (106-tone DRU 1+106-tone DRU 2+26-tone DRU 5+four additional tones); |
| | | 242-tone DRU 1 (106-tone DRU 3+106-tone DRU 4+26-tone DRU 14+four additional tones); |

For example, the 52-tone DRU 1 may include the 26-tone DRU 1 and the 26-tone DRU 2. For other 52-tone DRUs, details are not described. The 106-tone DRU 1 may include the 52-tone DRU 1, the 52-tone DRU 2, and the two additional tones (for example, represented by 106-1). For example, two additional tones in the 106-tone DRU 2 may be represented as 106-2; two additional tones in the 106-tone DRU 3 may be represented as 106-3; and two additional tones in the 106-tone DRU 4 may be represented as 106-4. The 242-tone DRU 1 may include the 106-tone DRU 1, the 106-tone DRU 2, the 26-tone DRU 5, and the four additional tones (for example, represented by 242-1). The 242-tone DRU 2 may include the 106-tone DRU 3, the 106-tone DRU 4, the 26-tone DRU 14, and the four additional tones (for example, represented by 242-2). The DRU in Table 5 may alternatively be replaced with an RRU.

It should be noted that a person skilled in the art may understand that the DRU may further have another manner of a tone plan. Details are not described herein.

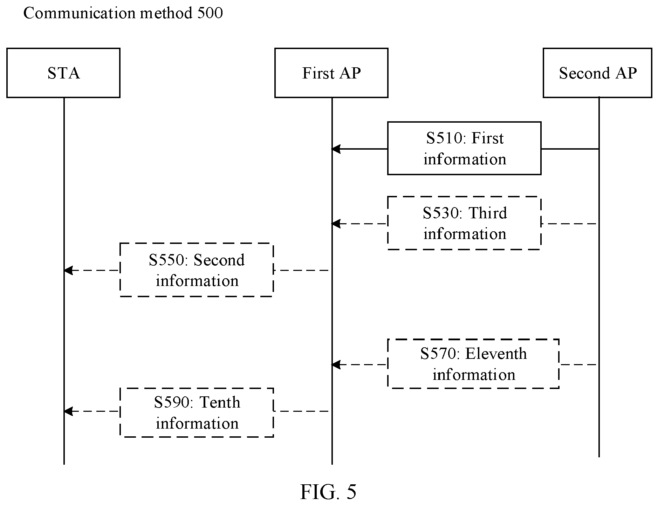

FIG. 5 is a schematic flowchart of a communication method 500 according to an embodiment of this application. According to the method 500, a transmit power in a multi-AP scenario can be increased. The following describes the method 500 with reference to FIG. 5.

S510: A first AP receives first information from a second AP. Correspondingly, the second AP sends the first information to the first AP.

The first AP may be a shared AP (or a secondary AP), and the second AP may be a sharing AP (or a primary AP). For example, the second AP may be an AP that preempts a TXOP. Optionally, the first information indicates a resource allocated by the second AP to the first AP. For example, the first information may indicate one or more RUs, and the one or more RUs are resources allocated by the second AP to the first AP. For example, the first AP may send, by using the one or more RUs indicated by the first information, data to a STA associated with the first AP, or the first AP may indicate the STA associated with the first AP to send data to the first AP on the one or more RUs.

The first information may be sent by the second AP. In some other optional embodiments, the first AP may learn of the first information through negotiation of at least two roles of the first AP, the second AP, or the STA.

Optionally, the first information indicates a first RU and a second RU. For example, the first information may include numbers of the first RU and the second RU. For example, the number of the first RU is #1, the number of the second RU is #2, and the first information may include #1 and #2. In another example, the first information may include a first RU and a second RU, for example, include a tone identifier in the first RU and a tone identifier in the second RU.

Optionally, the first RU is a DRU including N tones, and N may be a positive integer. Optionally, the second RU is an RRU including M tones, and M may be a positive integer. In an optional embodiment, M and N may be equal, that is, the first RU and the second RU have a same size. In another optional embodiment, M and N may be unequal, that is, the first RU and the second RU have different sizes.

It should be noted that the first RU in this application may be replaced with a first MRU, and the second RU may be replaced with a second MRU. The MRU may be considered as a form of an RU. For example, the first RU includes the first MRU, and the second RU includes the second MRU. This is not limited in this application.

The first RU and the second RU have a same size, so that information used to indicate the first RU and the second RU can be reduced, thereby reducing resource overheads. The first RU and the second RU have different sizes, so that flexibility of configuring the first RU and the second RU can be improved.

In an optional embodiment, the first information may separately indicate the first RU and the second RU. For example, the first information includes first indication information and second indication information, the first indication information indicates the first RU, and the second indication information indicates the second RU. For example, the first indication information indicates a 242-tone DRU 1, and the second indication information indicates a 242-tone RRU 1. In other words, the first information may separately indicate the first RU and the second RU, and the first RU and the second RU may have a same size and a same number. Optionally, the first RU and the second RU have different numbers and/or sizes. For example, the first indication information indicates a 242-tone DRU 1, and the second indication information indicates a 242-tone RRU 2. In other words, the first RU and the second RU have a same size but different numbers. For another example, the first indication information indicates a 242-tone DRU 1, and the second indication information indicates a 484-tone RRU 1. In other words, the first RU and the second RU have different sizes but a same number. For example, the first indication information indicates a 242-tone DRU 1, and the second indication information indicates a 484-tone RRU 2. In other words, the first RU and the second RU have different sizes and numbers.

The first RU and the second RU have different numbers, so that flexibility of configuring the first RU and the second RU can be improved. The first RU and the second RU have a same number, so that information used to indicate the first RU and the second RU can be reduced, thereby reducing resource overheads.

In another optional embodiment, the first information may jointly indicate the first RU and the second RU. In other words, the first information may indicate the first RU or the second RU. For example, the first information indicates a number and a size. The number and the size are a number and a size of the first RU, and a number and a size of the second RU. For example, the first information indicates a 242-tone RU 1. The 242-tone RU 1 may be a 242-tone DRU 1 (namely, the first RU), or may be a 242-tone RRU 1 (the second RU). It should be noted that a number of an RU may represent a location of the RU in an RU set. Optionally, the foregoing "number" may be replaced with a "location", an "index", or another name.

Further, the first AP may determine, based on the first information, whether the first RU or the second RU is used for transmission between the first AP and the STA and/or transmission between the first AP and the second AP. For example, the first AP may determine, according to a predefined rule, that the first RU is used for transmission from the first AP to the STA (which may be briefly referred to as "first downlink transmission" below). For example, the first AP determines, according to a provision of a standard or a specific situation, that the first RU is used for the first downlink transmission. For another example, the first AP may determine, according to an indication of the second AP, that the second RU is used for transmission from the STA to the first AP (which may be briefly referred to as "first uplink transmission" below). For example, the second AP sends indication information to the first AP, and the indication information indicates that the second RU is used for the first uplink transmission. For more descriptions, refer to the following. Details are not described herein.

It should be noted that, in a related technical solution, an RU allocated by the primary AP to the secondary AP is only an RRU. Therefore, the primary AP does not indicate the RRU and a DRU to the secondary AP, but indicates only the RRU to the secondary AP. However, in this application, an RU allocated by the second AP to the first AP may be an RRU or a DRU. Therefore, the first information indicates the first RU and the second RU. Whether the RU is an RRU or a DRU may be indicated in another manner, or determined by using a predefined rule, or selected by the first AP.

The first RU and the second RU may be understood as a resource pool of the first AP (for example, the secondary AP). When the resource pool is used for the first uplink transmission, the resource pool may also be referred to as an available uplink RU set. In other words, the first information may indicate the available uplink RU set. For example, some or all tones in the first RU and/or the second RU may be used for the first uplink transmission. For example, the first RU includes a 484-tone DRU, and the 484-tone DRU includes at least one of a 242-tone DRU, a 106-tone DRU, a 52-tone DRU, or a 26-tone DRU. It is assumed that the 484-tone DRU includes a 242-tone DRU 1 and a 242-tone DRU 2. The first AP may indicate the STA to perform the first uplink transmission by using the 242-tone DRU 1, that is, use some tones in the first RU. The first AP may alternatively indicate the STA to perform the first uplink transmission by using the 242-tone DRU 1 and the 242-tone DRU 2, that is, by using all tones in the first RU. When the resource pool is used for the first downlink transmission, the resource pool may also be referred to as a downlink RU. In other words, the first information may indicate the downlink RU. For example, tones in the first RU and/or the second RU may be used for the first downlink transmission. Generally, in a process of performing the first downlink transmission, the first AP may use all resources allocated by the second AP. However, this is not limited in this application. In the process of performing the first downlink transmission, the first AP may alternatively use a part of all the resources allocated by the second AP.

In some other optional embodiments, the first information indicates the first RU. For example, the RU allocated by the second AP to the first AP is only a DRU. Therefore, the first information indicates only the first RU.

In some other optional embodiments, the first information indicates the second RU. Optionally, the second AP indicates the first AP by using other information, and the first information may indicate the second RU, thereby changing that the first information indicates the second RU to that the first information indicates the first RU. In some other optional embodiments, the first information indicates an RU (which may be the first RU or the second RU). Optionally, the second AP indicates, by using other information, to the first AP whether the first information specifically indicates the first RU or the second RU.

The first information may be carried in a trigger frame, for example, a resource unit allocation subfield, a PS160 subfield, another field, or a new field of the trigger frame. However, a form of sending the first information is not limited in this application. For example, the first information may be alternatively carried in various locations, for example, a protocol data unit (presentation protocol data unit, PPDU) or another frame.

A name of the first information is not limited in this application. For example, the first information may also be referred to as a first indication, a first trigger frame, or resource allocation information, or have another name.

For ease of description, in the following, transmission from the first AP to the second AP (that is, transmission from the secondary AP to the primary AP) may be referred to as second uplink transmission, and transmission from the second AP to the first AP (that is, transmission from the primary AP to the secondary AP) may be referred to as second downlink transmission.

Optionally, the method 500 further includes S550.

S550: The first AP sends second information to the STA.

Optionally, the second information indicates that P tones in the N tones of the first RU are used for the transmission from the STA to the first AP, and P may be a positive integer less than or equal to N. In other words, the second information indicates to the STA that some or all tones in the first RU are used for the first uplink transmission.

A trigger condition of S550 is not limited in this application. In an example, the first AP may determine to perform S550 by itself. For example, the first AP may select, based on the first information, to use the first RU for the first uplink transmission. In another example, the first AP may determine, according to a predefined rule, to perform S550. For example, when receiving the first information, the first AP determines, according to a provision of a standard or a protocol, to use the first RU for the first uplink transmission. In still another example, the first AP may determine, based on an indication of the second AP or the STA, to perform S550. For example, the first AP receives indication information of the STA, and the indication information indicates the first AP to use the first RU for the first uplink transmission. For another example, the first AP receives indication information of the second AP, and the indication information indicates the first AP to use the first RU for the first uplink transmission.

The second information may be carried in a trigger frame, for example, a resource unit allocation subfield, a PS160 subfield, another field, or a new field of the trigger frame. However, a form of sending the second information is not limited in this application. For example, the second information may be alternatively carried in various locations, for example, a PPDU or another frame.

A name of the second information is not limited in this application. For example, the second information may also be referred to as a second indication, a second trigger frame, or resource allocation information, or have another name.

Optionally, the first AP receives a trigger-based physical layer protocol data unit (trigger-based physical layer protocol data unit, TB PPDU) from the STA, and information corresponding to a data field in the TB PPDU is carried on the foregoing P tones. Optionally, the first AP sends acknowledgment information (for example, an acknowledgment frame) to the STA, and the acknowledgment information is used to acknowledge that the first AP receives the TB PPDU.

According to the foregoing embodiment, the first information may indicate the DRU and the RRU. In other words, the second AP may allocate the DRU and the RRU to the first AP. The second AP may indicate the STA to transmit data to the first AP by using some or all tones in the DRU. In other words, the first AP may select the DRU from the DRU and the RRU that are allocated by the second AP, and indicate the STA to use the DRU to transmit data to the first AP. In the foregoing embodiment, the RU allocated to the first AP may be the DRU. In this way, the first AP can share a same frequency band resource with another AP, and use tones in the frequency band resource in an interleaved manner for data transmission, so that a transmit power of each tone transmitted by using the DRU is increased when power spectral density is limited. Therefore, a transmit power in the multi-AP scenario can be increased in the foregoing embodiments.

Optionally, the method 500 further includes S530.

S530: The first AP receives third information from the second AP. Correspondingly, the second AP sends the third information to the first AP.

Optionally, the third information indicates that the transmission from the STA to the first AP corresponds to the first RU. In other words, the third information indicates to the first AP that the first uplink transmission corresponds to the first RU.

That the transmission from the STA to the first AP corresponds to the first RU may be understood as that the transmission from the STA to the first AP needs to use some or all tones in the first RU. Alternatively, it may be understood that some or all tones in the first RU are used for the transmission from the STA to the first AP.

A form of the third information is not limited in this application. For example, the third information may be 1-bit (bit) information. The 1-bit information may indicate that the first uplink transmission is a DRU. In this way, in combination with the first RU and the second RU that are indicated by the first information in S510, the first AP may determine that the first uplink transmission corresponds to the first RU.

It should be noted that the foregoing is an example in which a bitmap (bit map) is used for the third information. However, a manner in which 1 bit indicates one or more pieces of information is not limited in this application. For example, the third information may further use more bits to indicate that the first uplink transmission is a DRU. In the following, a bitmap may also be used as an example for some information having an indication function. It should also be noted that the following example of the bitmap is merely an example, and does not constitute a limitation on this application. All examples of the bitmap may be replaced with more bits for information indication. This is not described again hereinafter.

Optionally, S550 includes: The first AP sends the second information to the STA in response to the third information.

The third information may be carried in a trigger frame, for example, a resource unit allocation subfield, a PS160 subfield, another field, or a new field of the trigger frame. However, a form of sending the third information is not limited in this application. For example, the third information may be alternatively carried in various locations, for example, a PPDU or another frame.

A name of the third information is not limited in this application. For example, the third information may also be referred to as a third indication, a third trigger frame, or resource allocation information, or have another name.

According to the foregoing embodiment, the second AP may indicate the first AP by using the third information, and the first AP may select the first RU based on an indication of the third information, and indicate the STA to perform the first uplink transmission (the transmission from the STA to the first AP) by using the first RU. The foregoing solution can support the second AP in indicating, on a proper occasion, the first AP to use the first RU, thereby increasing a transmit power of the transmission from the STA to the first AP.

Optionally, the method 500 further includes S590.

S590: The first AP sends tenth information to the STA.

Optionally, the tenth information indicates that Q tones in the M tones in the second RU are used for the transmission from the STA to the first AP, and Q may be a positive integer less than or equal to M. In other words, the tenth information indicates to the STA that some or all tones in the second RU are used for the first uplink transmission.

It should be noted that S550 and S590 may be used for different STAs, or may be used for a same STA. For example, the first AP is associated with a plurality of STAs. The first AP may send the second information to some STAs, to indicate the some STAs to perform the first uplink transmission by using the first RU. The first AP may send the tenth information to some other STAs, to indicate the some other STAs to perform the first uplink transmission by using the second RU. For another example, the first AP may send the second information to at least one STA, to indicate the at least one STA to perform the first uplink transmission by using the first RU. The first AP may send the tenth information to the at least one STA, to indicate the at least one STA to perform the first uplink transmission by using the second RU. The at least one STA may perform the first uplink transmission by using the first RU or the second RU.

For other descriptions of the tenth information, refer to the foregoing descriptions of the second information (for example, S550). A difference lies in that the "first RU" in the second information is replaced with the "second RU".

Optionally, the method 500 further includes S570.

S570: The first AP receives eleventh information from the second AP. Correspondingly, the second AP sends the eleventh information to the first AP.

Optionally, the eleventh information indicates that the transmission from the STA to the first AP corresponds to the second RU. In other words, the eleventh information indicates to the first AP that the first uplink transmission corresponds to the second RU.

It should be noted that, in a scenario in which the second AP is associated with a plurality of third APs (the second AP is one of the plurality of third APs), the second AP may send the third information to some third APs (including the second AP), and the third information indicates these third APs (including the second AP) to perform the first uplink transmission by using the first RU. The second AP may send the eleventh information to some other third APs, and the eleventh information indicates these third APs to perform the first uplink transmission by using the second RU. Alternatively, the second AP may not send the third information or the eleventh information, and the plurality of third APs select by themselves or determine, according to a predefined rule, whether the first uplink transmission corresponds to the first RU or the second RU. Alternatively, the second AP may send the third information or the eleventh information to some third APs, to respectively indicate the some third APs to perform the first uplink transmission by using the first RU or the second RU; and some other third APs determine, by themselves or according to a predefined rule, whether the first uplink transmission corresponds to the first RU or the second RU.

For other descriptions of the eleventh information, refer to the foregoing descriptions of the third information (for example, S530). A difference lies in that the "first RU" in the third information is replaced with the "second RU".

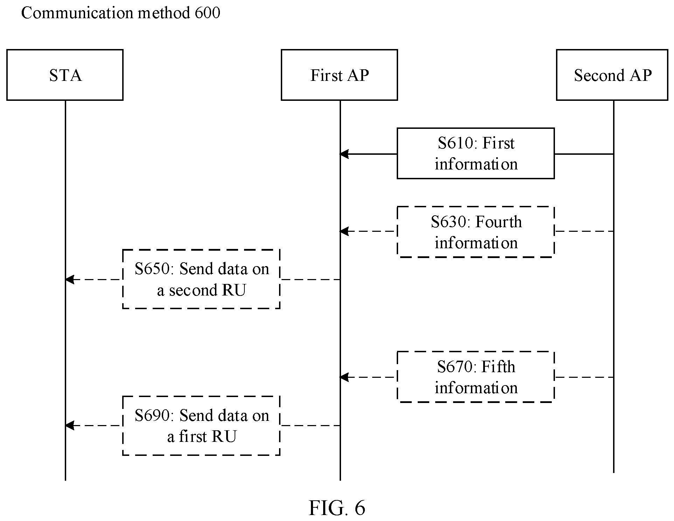

FIG. 6 is a schematic flowchart of a communication method 600 according to an embodiment of this application. The method 600 may be combined with any embodiment of the method 500. The following describes the method 600 with reference to FIG. 6.

S610: A first AP receives first information from a second AP. Correspondingly, the second AP sends the first information to the first AP.

For descriptions of the first information, refer to the foregoing S510. Details are not described herein again.

Optionally, the method 600 further includes S650.

S650: The first AP sends data to the STA on the second RU.

The foregoing S650 may be understood as that the first AP performs first downlink transmission by using the second RU. For example, the first AP may send a PPDU to the STA by using the second RU.

A trigger condition of S650 is not limited in this application. In an example, the first AP may determine to perform S650 by itself. For example, the first AP may select, based on the first information, to use the second RU for the first downlink transmission. In another example, the first AP may determine, according to a predefined rule, to perform S650. For example, when receiving the first information, the first AP determines, according to a provision of a standard or a protocol, to use the second RU for the first downlink transmission. In still another example, the first AP may determine, based on an indication of the second AP or the STA, to perform S650. For example, the first AP receives indication information of the STA, and the indication information indicates the first AP to use the second RU for the first downlink transmission. For another example, the first AP receives indication information of the second AP, and the indication information indicates the first AP to use the second RU for the first downlink transmission.

According to the foregoing embodiment, the first AP sends data to the STA by using the second RU, and a tone plan is relatively simple, thereby reducing system complexity.

Optionally, the method 600 further includes S630.

S630: The first AP receives fourth information from the second AP. Correspondingly, the second AP sends the fourth information to the first AP.

Optionally, the fourth information indicates that transmission from the first AP to the STA corresponds to the second RU. In other words, the fourth information indicates to the first AP that the first downlink transmission corresponds to the second RU.

That the transmission from the first AP to the STA corresponds to the second RU may be understood as that the transmission from the first AP to the STA needs to use some or all tones in the second RU. Alternatively, it may be understood that some or all tones in the second RU are used for the transmission from the first AP to the STA.

Optionally, S650 includes: The first AP sends the data to the STA on the second RU in response to the fourth information.

A form of the fourth information is not limited in this application. In an example, the fourth information may be 1-bit information. The 1-bit information may indicate that the first downlink transmission is an RRU. In this way, in combination with the first RU and the second RU that are indicated by the first information in S610, the first AP may determine that the first downlink transmission corresponds to the second RU.

Optionally, the fourth information indicates that the transmission from the first AP to the STA corresponds to the second RU, and indicates that transmission from the STA to the first AP corresponds to the first RU (or the second RU). In other words, the fourth information may indicate that the first downlink transmission corresponds to the second RU, and has a function of the third information (or the eleventh information), that is, indicates that the first uplink transmission corresponds to the first RU (or the second RU).

Optionally, S650 includes: The first AP sends the data to the STA on the second RU in response to the fourth information. Optionally, S550 includes: The first AP sends second information to the STA in response to the fourth information. Alternatively, S590 includes: The first AP sends tenth information to the STA in response to the fourth information.

A form of the fourth information is not limited in this application. In an example, the fourth information may be 1-bit information. The 1-bit information may indicate that the first downlink transmission is an RRU and has a function of the third information (or the eleventh information), that is, indicates that the first uplink transmission is a DRU (or an RRU). In this way, in combination with the first RU and the second RU that are indicated by the first information in S610, the first AP may determine that the first downlink transmission corresponds to the second RU, and the first uplink transmission corresponds to the first RU (or the second RU). In another example, the fourth information may be 2-bit information, and 1-bit information thereof may indicate that the first downlink transmission is an RRU, and the other 1-bit information may indicate that the first uplink transmission is a DRU (or an RRU). Optionally, the fourth information includes the third information or the eleventh information.

The fourth information may be carried in a trigger frame, for example, a resource unit allocation subfield, a PS160 subfield, another field, or a new field of the trigger frame. However, a form of sending the fourth information is not limited in this application. For example, the fourth information may be alternatively carried in various locations, for example, a PPDU or another frame.

A name of the fourth information is not limited in this application. For example, the fourth information may also be referred to as a fourth indication, a fourth trigger frame, or resource allocation information, or have another name.

According to the foregoing embodiment, the second AP may indicate the first AP by using the fourth information, and the first AP may select the second RU based on an indication of the fourth information, and perform the first downlink transmission (the transmission from the first AP to the STA) by using the second RU. The foregoing solution can support the second AP in indicating, on a proper occasion, the first AP to use the second RU, and a tone plan is relatively simple, thereby reducing system complexity. In addition, in the foregoing solution, the fourth information may be further used to indicate that RUs used for the first downlink transmission and the first uplink transmission (the transmission from the STA to the first AP) are respectively the second RU and the first RU. Compared with a solution in which two pieces of information are used for respectively indications, the foregoing embodiment reduces resource overheads.

Optionally, the method 600 further includes S690.

S690: The first AP sends the data to the STA on the first RU.

The foregoing S690 may be understood as that the first AP performs first downlink transmission by using the first RU. For example, the first AP may send a PPDU to the STA by using the first RU.

A trigger condition of S690 is not limited in this application. In an example, the first AP may determine to perform S690 by itself. For example, the first AP may select, based on the first information, to use the first RU for the first downlink transmission. In another example, the first AP may determine, according to a predefined rule, to perform S690. For example, when receiving the first information, the first AP determines, according to a provision of a standard or a protocol, to use the first RU for the first downlink transmission. In still another example, the first AP may determine, based on an indication of the second AP or the STA, to perform S690. For example, the first AP receives indication information of the STA, and the indication information indicates the first AP to use the first RU for the first downlink transmission. For another example, the first AP receives indication information of the second AP, and the indication information indicates the first AP to use the first RU for the first downlink transmission.

According to the foregoing embodiment, the first AP sends the data to the STA by using the first RU, thereby increasing a transmit power.

Optionally, the method 600 further includes S670.

S670: The first AP receives fifth information from the second AP. Correspondingly, the second AP sends the fifth information to the first AP.

Optionally, the fifth information indicates that transmission from the first AP to the STA corresponds to the first RU. In other words, the fifth information indicates to the first AP that the first downlink transmission corresponds to the first RU.

Optionally, the fifth information indicates that the transmission from the first AP to the STA corresponds to the first RU, and indicates that transmission from the STA to the first AP corresponds to the first RU. In other words, the fifth information may indicate that the first downlink transmission corresponds to the first RU, and the first uplink transmission corresponds to the first RU.

For other descriptions of the fifth information, refer to the foregoing descriptions of the fourth information (for example, S630). A difference lies in that related descriptions of "the first downlink transmission corresponds to the second RU (or an RRU)" in the fourth information is replaced with related descriptions of "the first downlink transmission corresponds to the first RU (or a DRU)".

According to the foregoing embodiment, the second AP may indicate the first AP by using the fifth information, and the first AP may select the first RU based on an indication of the fifth information, and perform the first downlink transmission (the transmission from the first AP to the STA) by using the first RU. The foregoing solution can support the second AP in indicating, on a proper occasion, the first AP to use the first RU, thereby increasing a transmit power. In addition, in the foregoing solution, the fifth information may be further used to indicate that the first RU is used for both the first downlink transmission and the first uplink transmission (the transmission from the STA to the first AP). Compared with a solution in which two pieces of information are used for respectively indications, the foregoing embodiment reduces resource overheads.

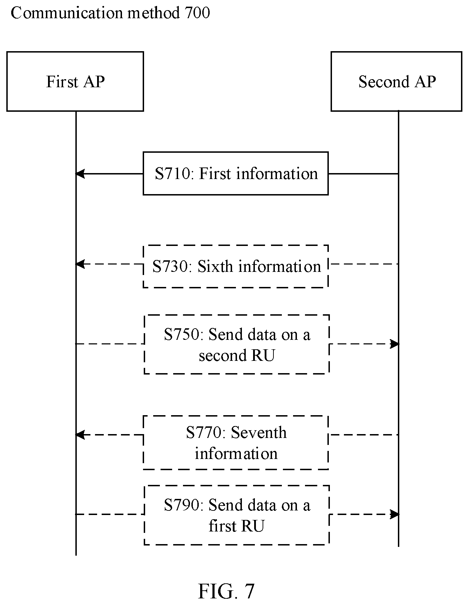

FIG. 7 is a schematic flowchart of a communication method 700 according to an embodiment of this application. The method 700 may be combined with any embodiment of the method 500 and the method 600. The following describes the method 700 with reference to FIG. 7.

S710: A first AP receives first information from a second AP. Correspondingly, the second AP sends the first information to the first AP.

For descriptions of the first information, refer to the foregoing S510. Details are not described herein again.

Optionally, the method 700 further includes S750.

S750: The first AP sends data to the second AP on the second RU. Correspondingly, the second AP receives the data from the first AP.

The foregoing S750 may be understood as that the first AP performs second uplink transmission by using the second RU. For example, the first AP may send a PPDU to the second AP by using the second RU.

A trigger condition of S750 is not limited in this application. In an example, the first AP may determine to perform S750 by itself. For example, the first AP may select, based on the first information, to use the second RU for the second uplink transmission. In another example, the first AP may determine, according to a predefined rule, to perform S750. For example, when receiving the first information, the first AP determines, according to a provision of a standard or a protocol, to use the second RU for the second uplink transmission. In still another example, the first AP may determine, based on an indication of the second AP or the STA, to perform S750. For example, the first AP receives indication information of the STA, and the indication information indicates the first AP to use the second RU for the second uplink transmission. For another example, the first AP receives indication information of the second AP, and the indication information indicates the first AP to use the second RU for the second uplink transmission.

According to the foregoing embodiment, the first AP sends the data to the second AP by using the second RU, thereby increasing a transmit power of the transmission from the first AP to the second AP.

Optionally, the method 700 further includes S730.

S730: The first AP receives sixth information from the second AP. Correspondingly, the second AP sends the sixth information to the first AP.

Optionally, the sixth information indicates that transmission from the first AP to the second AP corresponds to the second RU. In other words, the sixth information indicates to the first AP that the second uplink transmission corresponds to the second RU.

That the transmission from the first AP to the second AP corresponds to the second RU may be understood as that the transmission from the first AP to the second AP needs to use some or all tones in the second RU. Alternatively, it may be understood that some or all tones in the second RU are used for the transmission from the first AP to the second AP.

Optionally, S750 includes: The first AP sends the data to the second AP on the second RU in response to the sixth information.

A form of the sixth information is not limited in this application. In an example, the sixth information may be 1-bit information. The 1-bit information may indicate that the second uplink transmission is an RRU. In this way, in combination with the first RU and the second RU that are indicated by the first information in S710, the first AP may determine that the second uplink transmission corresponds to the second RU.

Optionally, the sixth information indicates that the transmission from the first AP to the second AP corresponds to the second RU, and has functions of third information (or eleventh information) and fourth information (or fifth information). In other words, the sixth information may indicate that the second uplink transmission corresponds to the second RU, and may indicate that first uplink transmission corresponds to the first RU (or the second RU) and/or the first downlink transmission corresponds to the second RU (or the first RU).

Optionally, S750 includes: The first AP sends the data to the second AP on the second RU in response to the sixth information. When the sixth information has a function of third information (or eleventh information) and/or a function of fourth information (or fifth information), for a combination with other steps in the foregoing method embodiments, refer to related descriptions of the third information (or the eleventh information) and the fourth information (or the fifth information). Details are not described herein again.

A form of the sixth information is not limited in this application. In an example, the sixth information may be 1-bit information. The 1-bit information may indicate that the first downlink transmission is an RRU and has the function of the third information (or the eleventh information) and/or the function of the fourth information (or the fifth information). In another example, the sixth information may be 2-bit information, 1 bit thereof may indicate that the first downlink transmission is an RRU, and the other 1 bit has the function of the third information (or the eleventh information) and/or the function of the fourth information (or the fifth information). Alternatively, 1 bit thereof has the function of the third information (or the eleventh information), and the other 1 bit indicates that the first downlink transmission is an RRU, and may further have the function of the fourth information (or the fifth information). Alternatively, 1 bit thereof has the function of the fourth information (or the fifth information), and the other 1 bit indicates that the first downlink transmission is an RRU, and may further have the function of the third information (or the eleventh information). In still another example, the sixth information may be 3-bit information, 1 bit thereof may indicate that the first downlink transmission is an RRU, another 1 bit may have the function of the third information (or the eleventh information), and the remaining 1 bit may have the function of the fourth information (or the fifth information).

The sixth information may be carried in a trigger frame, for example, a resource unit allocation subfield, a PS160 subfield, another field, or a new field of the trigger frame. However, a form of sending the sixth information is not limited in this application. For example, the sixth information may be alternatively carried in various locations, for example, a PPDU or another frame.

A name of the sixth information is not limited in this application. For example, the sixth information may also be referred to as a sixth indication, a sixth trigger frame, or resource allocation information, or have another name.

Optionally, the method 700 further includes S790.

S790: The first AP sends data to the second AP on the first RU. Correspondingly, the second AP receives the data from the first AP.

The foregoing S790 may be understood as that the first AP performs second uplink transmission by using the first RU. For example, the first AP may send a PPDU to the second AP by using the first RU.

A trigger condition of S790 is not limited in this application. In an example, the first AP may determine to perform S790 by itself. For example, the first AP may select, based on the first information, to use the first RU for the second uplink transmission. In another example, the first AP may determine, according to a predefined rule, to perform S790. For example, when receiving the first information, the first AP determines, according to a provision of a standard or a protocol, to use the first RU for the second uplink transmission. In still another example, the first AP may determine, based on an indication of the second AP or the STA, to perform S790. For example, the first AP receives indication information of the STA, and the indication information indicates the first AP to use the first RU for the second uplink transmission. For another example, the first AP receives indication information of the second AP, and the indication information indicates the first AP to use the first RU for the second uplink transmission.

According to the foregoing embodiment, the first AP sends the data to the second AP by using the first RU, and a tone plan is relatively simple, thereby reducing system complexity.

Optionally, the method 700 further includes S770.

S770: The first AP receives seventh information from the second AP. Correspondingly, the second AP sends the seventh information to the first AP.

Optionally, the seventh information indicates that transmission from the first AP to the second AP corresponds to the first RU. In other words, the seventh information indicates to the first AP that the second uplink transmission corresponds to the first RU.

For other descriptions of the seventh information, refer to the foregoing descriptions of the sixth information (for example, S730). A difference lies in that related descriptions of "the second uplink transmission corresponds to the second RU (or an RRU)" in the seventh information is replaced with related descriptions of "the second uplink transmission corresponds to the first RU (or a DRU)".

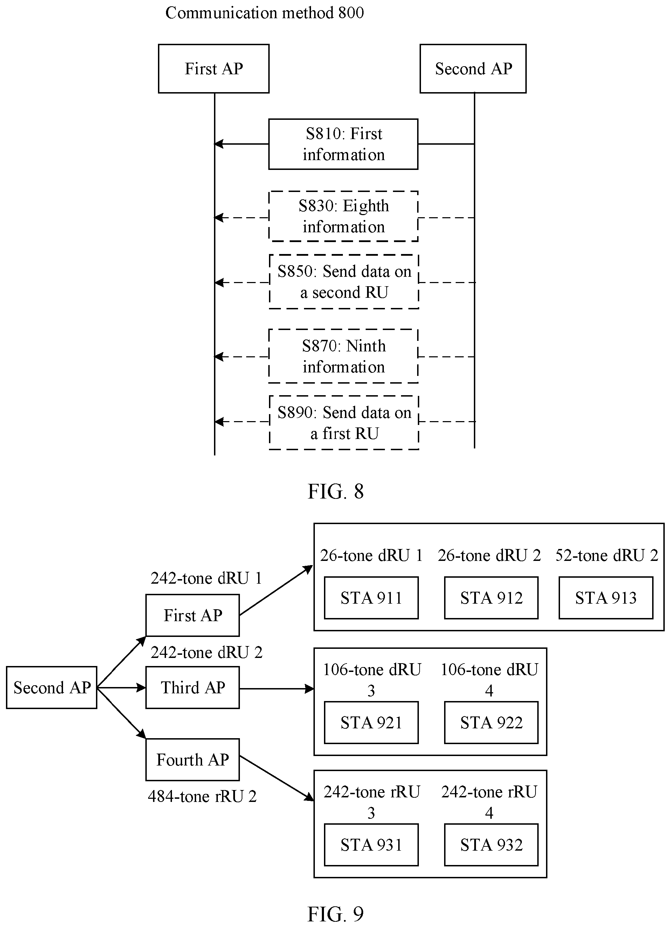

FIG. 8 is a schematic flowchart of a communication method 800 according to an embodiment of this application. The method 800 may be combined with any embodiment of the method 500, the method 600, and the method 700. The following describes the method 800 with reference to FIG. 8.

S810: A first AP receives first information from a second AP. Correspondingly, the second AP sends the first information to the first AP.

For descriptions of the first information, refer to the foregoing S510. Details are not described herein again.

Optionally, the method 800 further includes S850.

S850: The first AP receives data from the second AP on the second RU. Correspondingly, the second AP sends the data to the first AP.

The foregoing S850 may be understood as that the second AP performs second downlink transmission by using the second RU. For example, the second AP may send a PPDU to the first AP by using the second RU.

A trigger condition of S850 is not limited in this application. In an example, the second AP may determine to perform S850 by itself. For example, the second AP may select to use the second RU for the second downlink transmission. In another example, the second AP may determine, according to a predefined rule, to perform S850. For example, the second AP determines, according to a provision of a standard or a protocol, to use the second RU for the second downlink transmission. In still another example, the second AP may determine, based on an indication of the first AP or the STA, to perform S850. For example, the second AP receives indication information of the STA, and the indication information indicates the second AP to use the second RU for the second downlink transmission. For another example, the second AP receives indication information of the first AP, and the indication information indicates the second AP to use the second RU for the second downlink transmission.

According to the foregoing embodiment, the second AP sends the data to the first AP by using the second RU, thereby increasing a transmit power of transmission from the second AP to the first AP.

Optionally, the method 800 further includes S830.

S830: The first AP receives eighth information from the second AP. Correspondingly, the second AP sends the eighth information to the first AP.

Optionally, the eighth information indicates that transmission from the second AP to the first AP corresponds to the second RU. In other words, the eighth information indicates to the first AP that the second downlink transmission corresponds to the second RU.

That the transmission from the second AP to the first AP corresponds to the second RU may be understood as that the transmission from the second AP to the first AP needs to use some or all tones in the second RU. Alternatively, it may be understood that some or all tones in the second RU are used for the transmission from the second AP to the first AP.

A form of the eighth information is not limited in this application. In an example, the eighth information may be 1-bit information. The 1-bit information may indicate that the second downlink transmission is an RRU. In this way, in combination with the first RU and the second RU that are indicated by the first information in S810, the first AP may determine that the second downlink transmission corresponds to the second RU.

Optionally, the eighth information indicates that transmission from the first AP to the second AP corresponds to the second RU, and has a function of at least one of third information (or eleventh information), fourth information (or fifth information), or sixth information (or seventh information). In other words, the fourth information may indicate that second uplink transmission corresponds to the second RU, and may indicate at least one of the following: first uplink transmission corresponds to the first RU (or the second RU), first downlink transmission corresponds to the second RU (or the first RU), or the second uplink transmission corresponds to the first RU (or the second RU).

A form of the eighth information is not limited in this application. In an example, the eighth information may be 1-bit information. The 1-bit information may indicate that the second downlink transmission is an RRU, and has the function of at least one of the third information (or the eleventh information), the fourth information (or the fifth information), or the sixth information (or the seventh information).

In another example, the eighth information may be 2-bit information, 1 bit thereof may indicate that the second downlink transmission is an RRU, and the other 1 bit has the function of at least one of the third information (or the eleventh information), the fourth information (or the fifth information), or the sixth information (or the seventh information). Alternatively, 1 bit thereof has the function of the third information (or the eleventh information), and the other 1 bit indicates that the second downlink transmission is an RRU, and may further have the function of the fourth information (or the fifth information) and/or the function of the sixth information (or the seventh information). Alternatively, 1 bit thereof has the function of the fourth information (or the fifth information), and the other 1 bit indicates that the second downlink transmission is an RRU, and may further have the function of the third information (or the eleventh information) and/or the function of the sixth information (or the seventh information). Alternatively, 1 bit thereof has the function of the sixth information (or the seventh information), and the other 1 bit indicates that the second downlink transmission is an RRU, and may further have the function of the third information (or the eleventh information) and/or the function of the fourth information (or the fifth information).

In still another example, the eighth information may be 3-bit information, 1 bit thereof may indicate that the second downlink transmission is an RRU, and the other 2 bits respectively have functions of two of the third information (or the eleventh information), the fourth information (or the fifth information), and the sixth information (or the seventh information). Alternatively, 1 bit thereof may indicate that the second downlink transmission is an RRU, and indicate the third information (or the eleventh information), the fourth information (or the fifth information), or the sixth information (or the seventh information). Information that is in the third information (or the eleventh information), the fourth information (or the fifth information), and the sixth information (or the seventh information) and that is not indicated by the foregoing 1 bit is respectively indicated by the remaining 2 bits.

In yet another example, the eighth information may be 4-bit information, 1 bit thereof may indicate that the second downlink transmission is an RRU, and the other 3 bits respectively have the functions of the third information (or the eleventh information), the fourth information (or the fifth information), and the sixth information (or the seventh information).

The eighth information may be carried in a trigger frame, for example, a resource unit allocation subfield, a PS160 subfield, another field, or a new field of the trigger frame. However, a form of sending the eighth information is not limited in this application. For example, the eighth information may be alternatively carried in various locations, for example, a PPDU or another frame.

A name of the eighth information is not limited in this application, for example, a resource unit allocation subfield, a PS160 subfield, another field, or a new field of the trigger frame. For example, the eighth information may also be referred to as an eighth indication, an eighth trigger frame, or resource allocation information, or have another name.

Optionally, the method 800 further includes S890.

S890: The first AP receives data from the second AP on the first RU. Correspondingly, the second AP sends the data to the first AP.

The foregoing S890 may be understood as that the second AP performs second downlink transmission by using the first RU. For example, the second AP may send a PPDU to the first AP by using the first RU.

A trigger condition of S890 is not limited in this application. In an example, the second AP may determine to perform S890 by itself. For example, the second AP may select to use the first RU for the second downlink transmission. In another example, the second AP may determine, according to a predefined rule, to perform S890. For example, the second AP determines, according to a provision of a standard or a protocol, to use the first RU for the second downlink transmission. In still another example, the second AP may determine, based on an indication of the first AP or the STA, to perform S890. For example, the second AP receives indication information of the STA, and the indication information indicates the second AP to use the first RU for the second downlink transmission. For another example, the second AP receives indication information of the first AP, and the indication information indicates the second AP to use the first RU for the second downlink transmission.

According to the foregoing embodiment, the second AP sends the data to the first AP by using the first RU, and a tone plan is relatively simple, thereby reducing system complexity.

Optionally, the method 800 further includes S870.

S870: The first AP receives ninth information from the second AP. Correspondingly, the second AP sends the ninth information to the first AP.

Optionally, the ninth information indicates that transmission from the second AP to the first AP corresponds to the first RU. In other words, the ninth information indicates to the first AP that second downlink transmission corresponds to the first RU.

For other descriptions of the ninth information, refer to the foregoing descriptions of the eighth information (for example, S830). A difference lies in that related descriptions of "the second downlink transmission corresponds to the second RU (or an RRU)" in the eighth information is replaced with related descriptions of "the second downlink transmission corresponds to the first RU (or a DRU)".

It should be noted that an xth piece of information and a yth piece of information may be sent in one PPDU, where x may be 1 to 11, and y may be 1 to 11, provided that a transmitting end of the xth piece of information is the same as a transmitting end of the yth piece of information, a receiving end of the xth piece of information is the same as a receiving end of the yth piece of information. For example, the first information and the eighth information may be sent in one PPDU. A person skilled in the art may properly combine at least two pieces of information into one PPDU with reference to the foregoing embodiments and accompanying drawings for sending. For example, the first information, the eighth information, and the seventh information may be sent in a same PPDU. More examples are not described herein.

FIG. 9 is a diagram of a resource allocation scheme according to an embodiment of this application. It should be noted that FIG. 9 is merely an example, and does not constitute a limitation on this application.

Refer to FIG. 9. A second AP may be used as a primary AP, and a first AP, a third AP, and a fourth AP may be used as secondary APs of the second AP. The first AP is associated with a STA 911, a STA 912, and a STA 913; the third AP is associated with a STA 921 and a STA 922; and the fourth AP is associated with a STA 931 and a STA 932.

The first AP may obtain an available resource set (a 242-tone dRU 1) For example, a 242-tone dRU 3 may include a plurality of 26-tone dRUs, 52-tone dRUs, and 106-tone dRUs. In other words, the available resource set may be a dRU range, and the first AP may allocate a dRU to a STA in a range less than or equal to the dRU. Similarly, the third AP may allocate a dRU in tones of a 242-tone dRU 2.

It should be noted that, in some optional embodiments, the second AP may allocate dRUs to some secondary APs, and may allocate rRUs to some other secondary APs. An available resource set obtained by the fourth AP is a 484-tone rRU 2. Optionally, the fourth AP allocates an rRU to a STA (as shown in FIG. 9). In some other optional embodiments, the fourth AP may allocate a dRU to a STA.

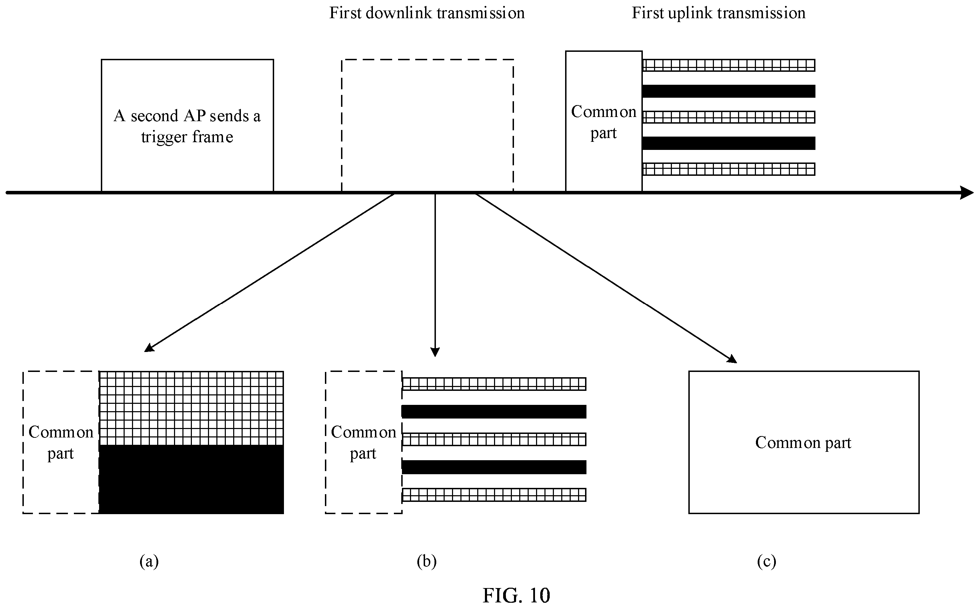

FIG. 10 is a diagram of transmission between a first AP and a STA according to an embodiment of this application. An arrow pointing from left to right represents time, and the further to the right indicates a later time. For example, an execution sequence shown in FIG. 10 is: a second AP sends a trigger frame, first downlink transmission, and first uplink transmission. A direction perpendicular to the arrow from the left to the right may represent a frequency. For example, for the first uplink transmission, a common part occupies a widest frequency. For example, a resource in the common part may carry a preamble field. A mesh shadow part and a pure black shadow part respectively represent resources occupied by data fields received by two secondary APs. It may be learned that the two secondary APs receive data fields of a PPDU at different frequencies (or tones). The following describes three examples of first downlink transmission by using an example in which a mesh shadow part corresponds to a first AP and a pure black shadow part corresponds to a third AP.

Refer to (a) in FIG. 10. Data fields of PPDUs of the first AP and the third AP may separately occupy a non-intersecting frequency band, that is, in a form of an RRU. For example, the data field of the first AP corresponds to a mesh shadow part, and the data field of the third AP corresponds to a pure black shadow part. Optionally, the PPDUs of the first AP and the third AP may have a common part. The common part may carry one or more fields. For example, the common part may carry a preamble field. However, this is not limited in this application. For example, the common part may carry a data field. For another example, the common part may carry a data field and a preamble field. For still another example, the common part may not exist.

The common part may be sent by the first AP and the third AP together (corresponding to an entire bandwidth). Alternatively, the first AP and the third AP may separately send a common part of the PPDU corresponding to the first AP and the PPDU corresponding to the third AP. A form of the common part may be copying at a granularity, and content is the same. For example, the common part may be replicated every 20 MHz. A form of the common part may be a known sequence. For example, the first AP sends a part of a bandwidth corresponding to a mesh shadow, and the third AP sends a part of a bandwidth corresponding to a pure black shadow. It is referred to as a common field because a receive end (for example, a STA) may obtain content of the mesh shadow or the pure black shadow by reading content in any frequency band. For example, a STA corresponding to the first AP may learn of content in the mesh shadow part of the first AP by reading a common part corresponding to a pure black shadow frequency band.

Refer to (b) in FIG. 10. Data fields of the first AP and the third AP may be in a form of a DRU. It may be understood that the mesh shadow part and the pure black shadow part may be discretely distributed in a plurality of frequency domain ranges. The common part may carry one or more fields. The foregoing one or more fields may be in a form of a DRU. Other descriptions of the common part are similar to those in (a) in FIG. 10. Details are not described again.

Optionally, this application may support hybrid RU allocation. In other words, in RUs allocated by the second AP, some are RRUs, and the other are DRUs. For example, (a) and (b) in FIG. 10 are combined.

Refer to (c) in FIG. 10. The PPDU may be a common part as a whole, that is, a STA may obtain corresponding information by reading a frequency band (for example, any 20 MHz in 80 MHz).

Optionally, a PPDU of first downlink transmission includes a trigger frame, and the trigger frame may be used to trigger uplink transmission of a STA associated with the secondary AP. For example, the trigger frame may exist in a data field of the first downlink transmission. Optionally, the trigger frame may be a trigger frame sent by a single AP. For example, refer to (a) in FIG. 10. The mesh shadow part and the pure black shadow part may respectively correspond to different trigger frames. Optionally, the trigger frames are trigger frames sent by a plurality of newly designed APs together. The trigger frames may be a same trigger frame.

It should be noted that, although in some descriptions of this application, an RU is used to represent a resource. However, the RU and the frequency domain range may be replaced with each other. For example, the frequency domain range may indicate the RU. For example, 20 MHz may indicate a 242-tone RU in this application. For another example, 40 MHz may indicate a 484-tone RU. For still another example, 80 MHz may indicate a 996-tone RU. For still another example, 160 MHz may indicate 2*996-tone RUs, and 320 MHz may indicate 4*996-tone RUs. The rest may be deduced by analogy.

The foregoing describes the method embodiments in embodiments of this application, and the following briefly describes corresponding apparatus embodiments. It should be understood that descriptions of the apparatus embodiments correspond to the descriptions of the method embodiments, and therefore for a part that is not described in detail, refer to the foregoing method embodiments.

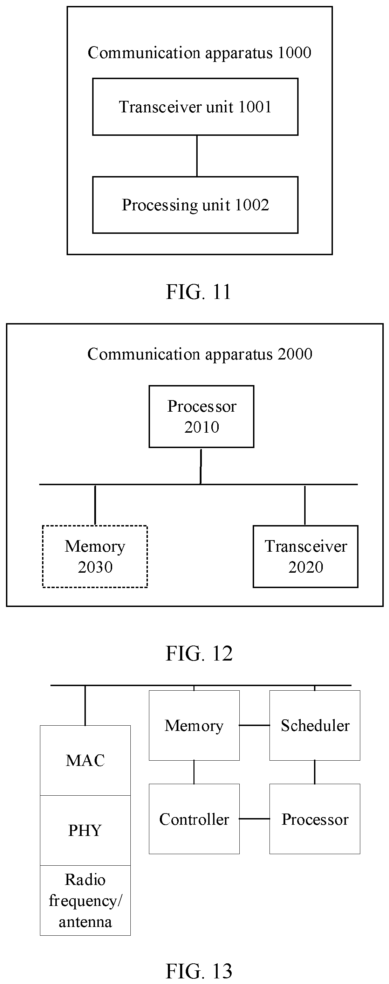

FIG. 11 is a diagram of a communication apparatus 1000 according to an embodiment of this application. As shown in FIG. 11, the communication apparatus 1000 includes a processing unit 1002 and a transceiver unit 1001. The communication apparatus 1000 may be a first AP, or may be a communication apparatus, for example, a chip, a chip system, or a circuit, that is applied to the first AP, or that is used in matching with the first AP and that can implement a method performed by the first AP. Alternatively, the communication apparatus 1000 may be a second AP, or may be a communication apparatus, for example, a chip, a chip system, or a circuit, that is applied to the second AP, or that is used in matching with the second AP and that can implement a method performed by the second AP.

The transceiver unit may also be referred to as a communication module, a transceiver module, a transceiver, a transceiver machine, a transceiver apparatus, or the like. The processing unit may also be referred to as a processor, a processing board, a processing module, a processing apparatus, or the like. Optionally, the transceiver unit is configured to perform sending operations and receiving operations of the first AP or the second AP in the foregoing method. A device that is in the transceiver unit and that is configured to implement a receiving function may be considered as a receiving unit, and a device that is in the transceiver unit and that is configured to implement a sending function may be considered as a sending unit. In other words, the transceiver unit includes the receiving unit and the sending unit.

When the communication apparatus 1000 is applied to the first AP, the processing unit 1002 may be configured to implement a processing function of the first AP in the foregoing embodiments, and the transceiver unit 1001 may be configured to implement a transceiver function of the first AP in the foregoing embodiments.

When the communication apparatus 1000 is applied to the second AP, the processing unit 1002 may be configured to implement a processing function of the second AP in the foregoing embodiments, and the transceiver unit 1001 may be configured to implement a transceiver function of the first AP in the foregoing embodiments.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/circuit (for example, an integrated circuit or a logic circuit), the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or a circuit (for example, an integrated circuit or a logic circuit).

Division into units or modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

FIG. 12 is a diagram of another communication apparatus 2000 according to an embodiment of this application. As shown in FIG. 12, optionally, the communication apparatus 2000 may be a chip or a chip system. Optionally, the chip system in this application may include a chip, or may include a chip and another discrete device.

The communication apparatus 2000 may be configured to implement a function of any network element (for example, the second AP or the first AP) in the communication system described in the foregoing example. The communication apparatus 2000 may include at least one processor 2010. Optionally, the processor 2010 is coupled to a memory 2030. The memory 2030 may be located in the apparatus. Alternatively, the memory 2030 may be integrated with the processor 2010. Alternatively, the memory 2030 may be located outside the apparatus. For example, the communication apparatus 2000 may further include at least one memory 2030. The memory 2030 stores a computer program, a computer program or instructions, and/or data that are/is necessary for implementing any one of the foregoing examples. The processor 2010 may execute the computer program stored in the memory 2030, to perform the method in any one of the foregoing examples.

The communication apparatus 2000 may further include a transceiver 2020 (or referred to as a communication interface), and the communication apparatus 2000 may exchange information with another device through the communication interface. For example, the communication interface may be a transceiver, a circuit, a bus, a module, a pin, or a communication interface of another type. When the communication apparatus 2000 is a chip-type apparatus or circuit, the communication interface in the apparatus 2000 may alternatively be an input/output circuit, and may input information (or referred to as receiving information) and output information (or referred to as sending information). The processor 2010 is an integrated processor, a microprocessor, an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 2010 may cooperate with the memory 2030 and the communication interface. A specific connection medium between the processor 2010, the memory 2030, and the communication interface is not limited in this application.

Optionally, as shown in FIG. 12, the processor 2010, the memory 2030, and the communication interface are connected to each other through a bus. Optionally, the bus may include a type of bus such as an address bus, a data bus, or a control bus. In addition, for ease of representation, FIG. 12 shows one bus, but this does not mean that there is only one bus or only one type of bus.

FIG. 13 shows a communication apparatus according to this application. The apparatus shown in FIG. 13 may be an AP or a non-AP station. A medium access control (medium access control, MAC) layer processing module, a physical (physical, PHY) layer processing module, radio frequency/an antenna, and the like are configured to implement related functions of the foregoing transmitter and receiver. As shown in FIG. 13, in addition to the MAC layer processing module, the PHY layer processing module, the radio frequency/antenna, a memory, and a processor, the apparatus may further include a controller and a scheduler.

It should be understood that FIG. 13 shows merely an example of an apparatus according to this application, and does not constitute a limitation on this application. For example, the apparatus may alternatively not include the controller and/or the scheduler.

It should be understood that the processor mentioned in this embodiment of this application may be the following device or a part of circuits configured for a processing function in the following device: a central processing unit (central processing unit, CPU) or another general-purpose processor, a digital signal processor (digital signal processor, DSP), an application specific-integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

In embodiments of this application, the method in the foregoing embodiments may be performed by the first AP and the second AP, or may be performed by a chip, a chip system, or a circuit of the first AP and the second AP. The chip, the chip system, or the circuit may be installed in the first AP and the second AP.

According to the method provided in embodiments of this application, this application further provides a computer program product. The computer program product includes computer program code. When the computer program code is run on a computer, the computer is enabled to perform the method in the foregoing method embodiment.

According to the method provided in embodiments of this application, this application further provides a computer-readable medium. The computer-readable medium stores program code. When the program code is run on a computer, the computer is enabled to perform the method in the foregoing method embodiment.

According to the method provided in embodiments of this application, this application further provides a system, and the system includes the foregoing first AP and/or second AP.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiment is merely an example. For example, the unit division is merely logical function division, and there may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first access point AP, and the method comprises:
receiving first information from a second AP, wherein the first information indicates a first RU and a second RU, the first RU is a discrete RU comprising N tones, the second RU is a regular RU comprising M tones, N is a positive integer, and M is a positive integer; and
sending second information to a station STA, wherein the second information indicates that P tones in the N tones of the first RU are used for transmission from the STA to the first AP, and P is a positive integer less than or equal to N.

2. The method according to claim 1, wherein the method further comprises:
receiving third information from the second AP, wherein the third information indicates that the transmission from the STA to the first AP corresponds to the first RU.

3. The method according to claim 1 or 2, wherein the method further comprises:
sending data to the STA on the second RU.

4. The method according to claim 3, wherein the method further comprises:
receiving fourth information from the second AP, wherein the fourth information indicates that transmission from the first AP to the STA corresponds to the second RU; or
the fourth information indicates that transmission from the first AP to the STA corresponds to the second RU, and indicates that the transmission from the STA to the first AP corresponds to the first RU.

5. The method according to claim 1 or 2, wherein the method further comprises:
sending data to the STA on the first RU.

6. The method according to claim 5, wherein the method further comprises:
receiving fifth information from the second AP, wherein the fifth information indicates that transmission from the first AP to the STA corresponds to the first RU; or
the fifth information indicates that transmission from the first AP to the STA corresponds to the first RU, and indicates that the transmission from the STA to the first AP corresponds to the first RU.

7. The method according to any one of claims 1 to 6, wherein M=N.

8. The method according to any one of claims 1 to 7, wherein a number of the first RU is the same as a number of the second RU.

9. A communication method, wherein the method is applied to a second access point AP, and the method comprises:
sending first information to a first AP, wherein the first information indicates a first RU and a second RU, the first RU is a discrete RU comprising N tones, the second RU is a regular RU comprising M tones, N is a positive integer, and M is a positive integer.

10. The method according to claim 9, wherein the method further comprises:
sending third information to the first AP, wherein the third information indicates that transmission from the STA to the first AP corresponds to the first RU.

11. The method according to claim 9, wherein the method further comprises:
sending fourth information to the first AP, wherein the fourth information indicates that transmission from the first AP to the STA corresponds to the second RU; or
the fourth information indicates that transmission from the first AP to the STA corresponds to the second RU, and indicates that transmission from the STA to the first AP corresponds to the first RU.

12. The method according to claim 9, wherein the method further comprises:
sending fifth information to the first AP, wherein the fifth information indicates that transmission from the first AP to the STA corresponds to the first RU; or
the fifth information indicates that transmission from the first AP to the STA corresponds to the first RU, and indicates that transmission from the STA to the first AP corresponds to the first RU.

13. The method according to any one of claims 9 to 12, wherein M=N.

14. The method according to any one of claims 9 to 13, wherein a number of the first RU is the same as a number of the second RU.

15. A communication apparatus, comprising a processing circuit and an input/output interface, wherein the input/output interface is configured to input and/or output a signal, and the processing circuit is configured to perform the method according to any one of claims 1 to 8, or the processing circuit is configured to perform the method according to any one of claims 9 to 14.

16. A communication apparatus, comprising a processor and a memory, wherein the memory stores a computer program or instructions, and the processor is configured to execute the computer program or the instructions, so that the communication apparatus is enabled to perform the method according to any one of claims 1 to 8, or the communication apparatus is enabled to perform the method according to any one of claims 9 to 14.

17. A computer-readable storage medium, wherein the computer-readable storage medium stores a computer program or instructions, and when the computer program or the instructions are run on a computer, the method according to any one of claims 1 to 8 is performed, or the method according to any one of claims 9 to 14 is performed.

18. A computer program product, comprising computer program code, wherein when the computer program code is run, the method according to any one of claims 1 to 8 is implemented, or the method according to any one of claims 9 to 14 is implemented.

19. A communication system, comprising a first access point AP and a second AP, wherein the first AP is configured to perform the method according to any one of claims 1 to 8, and the second AP is configured to perform the method according to any one of claims 9 to 14.

20. A chip, comprising a processor, wherein the processor is configured to execute a computer program or instructions, so that the chip is enabled to perform the method according to any one of claims 1 to 8, or the chip is enabled to perform the method according to any one of claims 9 to 14.
